# EUROPEAN PATENT APPLICATION

(11) **EP 1 219 476 A1**
(43) Date of publication of application: **03.07.2002**
(21) Application number: 00128691.3
(22) Date of filing: 29.12.2000
(51) Int. Cl.: B60G 17/02, B60G 13/00, B60G 15/02, B60G 13/14

(54) **Motor controlled suspension system for adjusting the height of a vehicle body and a damping force**

(71) Applicant: Mando Corporation, Pyungtaek-si, Kyonggi-do 451-821 (KR)
(72) Inventor: Koh, You-Seok, Mando Corporat., Central R&D Center, Pyungtaek-Si, Kyonggi-do 451-821 (KR)
(74) Representative: Lorenz, Werner, Dr.-Ing.

(57) **Abstract**

A shock absorber includes a cylinder (51,72,92), a piston rod (53,76,96) projecting from an upper portion of the cylinder, and an electric motor (60,73,95) for adjusting a vehicle height and/or controlling a damping force. The rotational motion of the motor is converted into a linear motion of the piston rod and vice versa.

## Description

The present invention relates to a suspension system of a vehicle; and, more particularly, to a suspension system capable of damping vibrations and adjusting the height of a vehicle body by using an electric motor.

A vehicle is provided with suspension units each being mounted between a vehicle body and an axle of each wheel of a vehicle. The suspension units damp or reduce vibrations or impacts from the wheels during driving.

The vehicle may not necessarily be operated on a flat and paved road. It may run on a rough road which is not paved yet or under construction and a lower chassis of the vehicle or related parts may bump on projections of the rough road. In this case, the height of the vehicle needs to be increased for preventing the lower chassis from bumping.

On the other hand, if the vehicle is running at a high speed on an expressway, it is preferable to decrease the height of the vehicle for the sake of the safety.

Thus, suspension units capable of adjusting a vehicle height have been proposed. One of them is disclosed in USPN 4,666,135 entitled "AIR SUSPENSION" issued to Shuuichi Buma et al. on May 19, 1987. The air suspension system includes an air spring provided between a vehicle body and a suspension arm and the vehicle height is adjusted by changing the volume of the air spring. The conventional air suspension system, however, suffers from inherent drawbacks. That is, the structure of the air suspension system is rather complex, requiring a compressor, an air tank, an air spring etc. for generating the compressed air and controlling the volume thereof to adjust the vehicle height. And the spring constant of the air spring varies with the change of the vehicle height itself, resulting in deteriorated ride comfort, necessitating additional devices for reducing the change in the spring constant, which in turn entails further structural complexity.

It is, therefore, a primary object of the present invention to provide a suspension system capable of damping vibrations and adjusting a vehicle height by using an electric motor with a reduced structural complexity.

In accordance with an embodiment of the present invention, there is provided a suspension system for adjusting a vehicle height comprising:
a shock absorber including a cylinder and a piston rod; an electric motor including a rotator; and a device including a threaded rod, one end of the threaded rod being rigidly secured to the rotator, and a threaded inner periphery, into which the threaded rod is screwed, wherein the device converts a rotational movement of the rotator into a linear movement of the shock absorber.

In accordance with another embodiment of the present invention, there is provided an electrically adjustable suspension system comprising: a cylinder; an electric motor including a rotator; a ball screw, an lower end thereof being rigidly secured to an upper end of the rotator; and a piston rod, in which a threaded inner periphery is formed, wherein the ball screw is screwed into the threaded inner periphery, and the ball screw and the threaded inner periphery convert a rotational movement of the motor into a linear movement of the piston rod, and a linear movement of the piston rod into a rotational movement of the rotator.

The above and other objects and features of the present invention will become apparent from the following description of preferred embodiments given in conjunction with the accompanying drawings, in which:
- Fig. 1: offers a suspension system capable of adjusting a vehicle height by using a motor in accordance with a first embodiment of the present invention;
- Fig. 2: describes a suspension system capable of adjusting a vehicle height by using a motor in accordance with a second embodiment of the present invention; and
- Fig. 3: presents a suspension system capable of adjusting a vehicle height and damping vibrations from a wheel by using a motor in accordance with a third embodiment of the present invention.

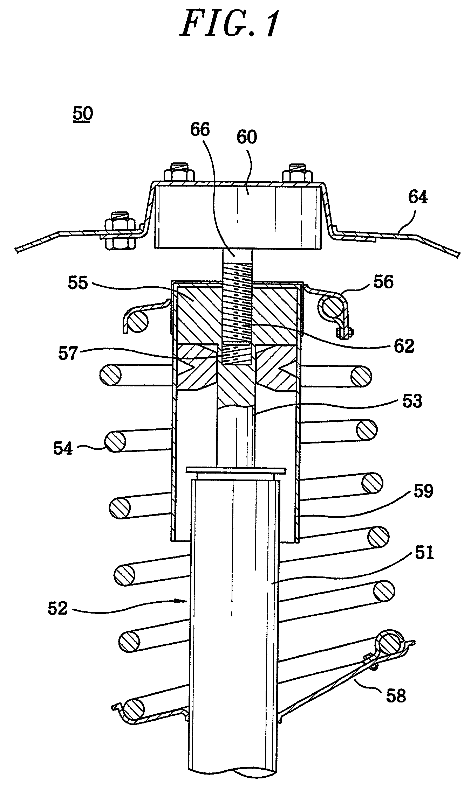

Referring to Fig. 1, there is shown a suspension system 50 in accordance with a first embodiment of the present invention. The suspension system 50 includes a shock absorber 52, a coil spring 54 encircling the shock absorber 52, an upper seat 56 to which an upper end portion of the coil spring 54 is rigidly fixed, a lower seat 58 to which a lower end portion of the coil spring 54 is fixed, and a motor 60 for providing the suspension system 50 with a torque required to adjust a vehicle height. The shock absorber 52 has a cylinder 51. A lower end of the cylinder 51 is secured on an axle of a wheel and a piston rod 53 projects from an upper end of the cylinder 51. Further, the lower seat 58 is rigidly secured on a side wall of the cylinder 51. The piston rod 53 has an enlarged collar 55 integrally formed at an upper end thereof. The enlarged collar 55 and the piston rod 53 are provided with a threaded inner periphery 57. The collar 55 is inserted in and fixedly attached to a dust cover 59 on which the upper seat 56 is fixedly attached. A threaded rod 62 is screwed into the inner periphery 57. A motor 60 firmly fixed on a vehicle body 64 includes a rotator 66, a lower end of which is integrally attached to an upper end of the threaded rod 62.

Since the rotator 66 of the motor 60 is integrally connected to the upper end of the threaded rod 62, the threaded rod 62 rotates when the motor 60 rotates. And the rotation of the threaded rod 62 in the periphery 57 causes the threaded rod 62 to move upward or downward along the periphery 57 as in a ball screw converting a rotational motion into a linear motion. If the threaded rod 62 moves upward, the length of the threaded rod 62 exposed from the enlarged collar 55 becomes longer, thereby resulting in an increased vehicle height. On the other hand, if the threaded rod 62 moves downward, the length of the threaded rod 62 exposed from the enlarged collar 55 becomes shorter, which gives rise to a decreased vehicle height.

The electric motor 60 is controlled by a controller (not shown) connected to several sensors (not shown) capable of detecting road, and vehicle traveling conditions and a vehicle height. The controller determines whether to adjust the vehicle height by analyzing signals from the sensors, and then adjusts the vehicle height accordingly by controlling the motor 60. Vehicle height control schemes carried out in such a controller are well known in the art and therefore, will not be described in detail for the sake of simplicity.

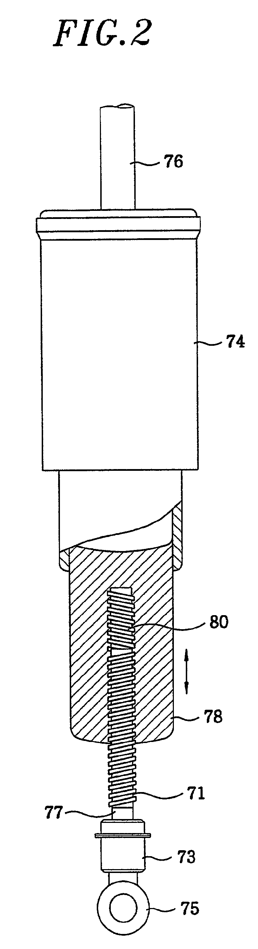

Referring to Fig. 2, there is illustrated a shock absorber 70 in accordance with a second embodiment of the present invention. The shock absorber 70 includes a cylinder 72, a dust cover 74, a piston rod 76, an upper end thereof being mounted on the vehicle body and an elongated end portion 78 integrally attached to a bottom of the cylinder 72. A threaded inner periphery 80 is formed in the elongated end portion 78. Into the periphery 80, a threaded rod 71 is screwed. A motor 73 has a rotator 77, an upper end of which is rigidly connected to a lower end of the threaded rod 71. A joint 75 is rigidly connected to a lower end of the motor 73 and is mounted on a fixture, e.g., an axle of a wheel.

Since the threaded rod 71 is fixedly connected to the rotator 77, the threaded rod 71 rotates when the rotator 77 rotates. The rotation of the threaded rod 71 in the periphery 77 causes the shock absorber 72 to move upward or downward as in a ball screw converting a rotational motion into a linear motion to thereby change the vehicle height. If the shock absorber 72 moves upward, the length of the threaded rod 71 exposed from the elongated end portion 78 becomes longer, resulting in an increased vehicle height. On the other hand, if the shock absorber moves downward, the length of the threaded rod 71 exposed from the elongated end portion 78 becomes shorter, resulting in a decreased vehicle height.

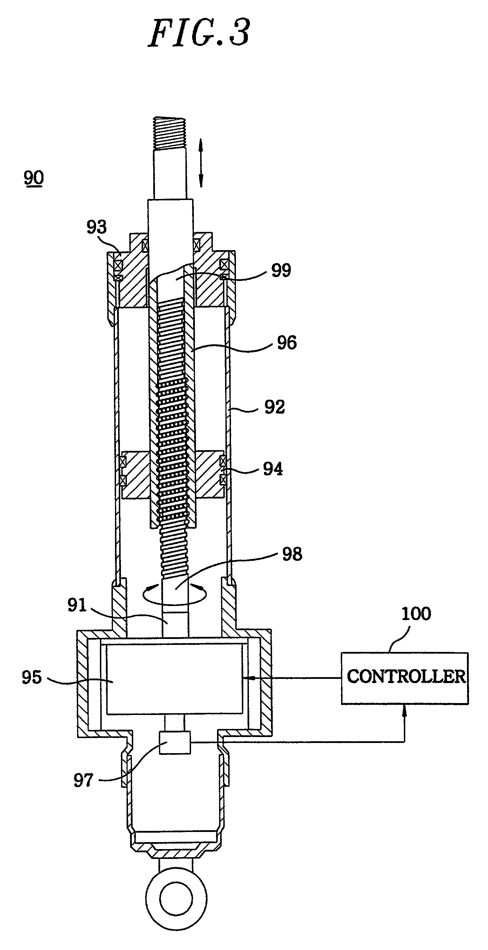

Referring to Fig. 3, there is shown a suspension system 90 capable of functioning as a shock absorber and a vehicle height adjuster in accordance with a third embodiment of the present invention. The suspension system 90 includes a cylinder 92 containing a gas, e.g., air; a piston rod 96, an upper end thereof being mounted under a vehicle body and a threaded inner periphery 99 being formed in a lower end portion of the piston rod 96; a guide ring 94 fixedly mounted on a peripheral portion of the piston rod 96 and slidably fitted with an inner surface of the cylinder 92; a ball screw 98 screwed into the inner periphery 99; and a cap 93 inserted in an upper end of the cylinder 92, the piston rod 96 slidably moving up and down through the cap 93. A motor 95 is contained in a lower portion of the cylinder 92 and has a rotator 91, an upper end of which is fixedly attached to a lower end of the ball screw 98. Attached under the motor 95 is a sensor 97 capable of gauging the rotation speed and the rotation direction of the motor 95 and dispatching a signal indicating the gauged direction and speed. A controller 100 receives the signal from the sensor 97 and controls the motor 95 according to the signal.

As well known in the art, a ball screw converts a rotational motion into a linear motion, and vice versa. Therefore, a rotational motion of the motor 95 is converted into a linear motion of the piston rod 96, and vice versa. When a linear movement of the piston rod 96 is induced by external force urged on the vehicle, e.g., while traveling, the linear movement is converted into a rotational motion of the ball screw, which in turn is detected by the sensor 97. In response to the detected signal from the sensor 97, the controller 100 controls the motor 95 by supplying a current appropriate to counteract against the movement of the piston rod 96 in a manner same as in conventional shock absorber. For instance, if a ball screw 98 rotates in a first direction due to the downward movement of the piston rod 96, the controller 100 provides the motor 95 with a current capable of generating a torque in a second direction opposite to the first one. Similarly, when the piston rod 96 moves upward, the motor is controlled to generate a torque being applied to the ball screw 98 in first direction.

If an adjustment of a vehicle height needs to be made while there is no movement of the piston rod 96 due to an external force, the controller 100 supplies a current to drive the motor 95 to rotate the ball screw 98 and maintain the piston rod 96 at an adjusted position. The driving current required in performing the combined functions of the vehicle height adjustment and damping in the presence of the external forces is analogue to an AC signal having a DC component and an AC component. In another words, a current required to adjust the vehicle height corresponds to a DC component of an AC signal and a current required in performing the damping function corresponds to an AC component thereof.

The functions of adjusting a vehicle height and a damping force can be achieved separately by using two motors, e.g. by installing an additional motor outside the cylinder 92 as in the first and the second embodiments of the present invention shown is Figs. 1 and 2. In that case, the motor 95 inside the cylinder 92 is used in adjusting the damping force only and the additional motor is configured to control the vehicle height.

While the invention has been shown and described with respect to the preferred embodiments, it will be understood by those skilled in the art that various change and modification may be made without departing from the scope of the invention as defined in the following claims.

## Claims

1. A suspension system for electrically adjusting a vehicle height comprising:
a shock absorber including a cylinder and a piston rod;
an electric motor including a rotator; and
a device including a threaded rod, one end of the threaded rod being rigidly secured to the rotator, and a threaded inner periphery, into which the threaded rod is screwed,
wherein the device converts a rotational movement of the rotator into a linear movement of the shock absorber.

2. The suspension system of claim 1, wherein the device is rigidly mounted on an upper end of the piston rod.

3. The suspension system of claim 1, wherein the device is rigidly mounted on under a lower end of the cylinder.

4. A suspension system for electrically adjusting a vehicle height and damping force comprising:
a cylinder;
an electric motor including a rotator;
a ball screw, a lower end thereof being rigidly secured to an upper end of the rotator; and
a piston rod, in which a threaded inner periphery is formed,
wherein the ball screw is screwed into the threaded inner periphery, and the ball screw and the threaded inner periphery convert a rotational movement of the rotator into a linear movement of the piston rod, and a linear movement of the piston rod into a rotational movement of the rotator.

5. The suspension system of claim 4, wherein the electric motor is fixedly mounted inside the cylinder.

6. A suspension system for electrically adjusting a damping force comprising:
a cylinder;
an electric motor including a rotator;
a ball screw, a lower end thereof being rigidly secured to an upper end of the rotator; and
a piston rod, in which a threaded inner periphery is formed,
wherein the ball screw is screwed into the threaded inner periphery, and the ball screw and the threaded inner periphery convert a rotational movement of the rotator into a linear movement of the piston rod, and a linear movement of the piston rod into a rotational movement of the rotator.

7. The suspension system of claim 6, wherein the electric motor is fixedly mounted inside the cylinder.

8. A suspension system of claim 7, further comprising a second electric motor for adjusting a vehicle height, the second electric motor being outside the cylinder.

9. A suspension system of claim 8, wherein the second electric motor is engaged with an upper end portion of the piston rod.

10. A suspension system of claim 8, wherein the second electric motor is engaged with lower end of the cylinder.
